# EUROPEAN PATENT SPECIFICATION

(11) **EP 2 903 102 B1**
(45) Date of publication and mention of the grant of the patent: **16.12.2020**
(21) Application number: 13842780.2
(22) Date of filing: 19.09.2013
(51) Int. Cl.: H01R 13/713, H01M 10/46, H02J 7/00, B60L 3/00, B60L 3/04, H01M 10/48, B60L 53/16, B60L 53/18, B60L 53/65

(54) **CONNECTOR FOR ELECTRICAL CONNECTIONS FOR ELECTRIC VEHICLE**
VERBINDER FÜR ELEKTRISCHE VERBINDUNGEN FÜR EIN ELEKTROFAHRZEUG
CONNECTEUR POUR CONNEXIONS ÉLECTRIQUES DE VÉHICULE ÉLECTRIQUE

(30) Priority: 28.09.2012 JP 2012217614
(43) Date of publication of application: 05.08.2015
(73) Proprietor: Panasonic Intellectual Property Management Co., Ltd., Osaka-shi, Osaka 540-6207 (JP)
(72) Inventor: LEE, Haeree, Osaka-shi, Osaka 540-6207 (JP); KAGAWA, Takuya, Osaka-shi, Osaka 540-6207 (JP); SHIBATA, Tetsuji, Osaka-shi, Osaka 540-6207 (JP); GODA, Jun, Osaka-shi, Osaka 540-6207 (JP)
(74) Representative: Müller-Boré & Partner Patentanwälte PartG mbB
(86) International application number: PCT/JP2013/005523
(87) International publication number: WO 2014/050032

(56) References cited:
- JP-A- H06 343 204
- JP-A- H10 262 340
- JP-A- 2009 136 073
- JP-A- 2010 110 055
- JP-A- 2010 213 552
- US-A- 5 751 135
- US-A1- 2011 169 447
- US-A1- 2011 216 453
- US-B1- 6 692 284

## Description

### TECHNICAL FIELD

The invention relates to a connector for electrical connection for an electrically driven vehicle.

### BACKGROUND ART

For example, Document 1 (JP 2010-110055 A) discloses a charging cable for charging of a battery mounted in an electrically driven vehicle, such as an electric vehicle (EV) or a plug-in hybrid electric vehicle (PHEV).

The charging cable includes: a power plug to be detachably connected with a power receptacle of a commercial power supply; and a connector for vehicle to be detachably connected with the electrically driven vehicle for supplying a charging current to the battery of the electrically driven vehicle. The power plug and the connector for vehicle are connected with each other via an electric cable. The electric cable is provided with a control box that is interposed therein. The control box stores therein: a switching circuit that is configured to switch opening/closing of an electric circuit between the power plug and the connector for vehicle; and a control circuit that is configured to stop electric power received from the commercial power supply by allowing the switching circuit to open the electric circuit, when detecting an abnormality during charging.

Regarding the charging cable, when the power plug is connected with the power receptacle and the connector for vehicle is connected with the electrically driven vehicle, the charging of the battery is performed, using the electric power from the commercial power supply. Further, regarding the charging cable, when an abnormality (such as an increase in temperature of the power plug, or electrical leakage) occurs during the charging of the battery, the control circuit detects the abnormality, and allows the switching circuit to open the electric circuit to stop the charging of the battery. In this way, it is possible to protect circuits upon the occurrence of the abnormality.

Here, regarding the charging cable disclosed in the above-mentioned Document 1, the control box is interposed in the electric cable, and accordingly, the control box may become an obstacle when the electric cable is returned to its original place. Although there has been provided a charging cable without such a control box, such a charging cable has no function of detecting an abnormality occurring in an electric circuit. Accordingly, in order to have function of detecting an abnormality, it has been required to interpose the control box in the electric cable.

In addition, the conventional control circuit is merely provided for stopping the electric power from the commercial power supply. When an abnormality occurs in a wiring region between the control box and a connector connected with a storage battery (i.e., EV), a protective function with respect to electric power from the storage battery side is not sufficient. Therefore, recently, further enhancement of the protective function is desired. When a short-circuit abnormality occurs in the above-mentioned region, a protective function with respect to a short-circuit current caused by electric power from the electrically driven vehicle (storage battery) is not sufficient. Also, even when the electric circuit is opened in the control box according to an electrical leakage abnormality occurring in the above-mentioned region, an electrical leakage with respect to electric power from the electrically driven vehicle (storage battery) is not sufficiently protected.
Document 2 (US 2011/216453 A1) discloses an electrical device configured to be disposed in an electrical distribution system between a source of electrical power and an electrical load. The device includes a grounding confirmation circuit that includes at least one signal generator that directs at least one test signal into a current path that includes at least the line ground conductor. The grounding confirmation circuit is configured to determine a ground continuity status of the current path based on at least one ground continuity measurement.
Document 3 (US 6 692 284 B1) discloses an improved electrical socket which includes a plurality of socket apertures to receive the pins of plugs. The socket apertures can receive the pins of plugs of various designs from many countries of the world. A circuit breaker on the electrical socket prevents damage to an appliance attached to the socket due to current leakage or shock current, and the user is warned when there is a heat overload. An improved electrical plug is also described.

Document 4 (US 5,751,135) discloses a charging connector device for an electric vehicle composed of a power supplying connector and a power receiving connector. An indicator lamp of a two color type is set in an illumination chamber within a case body of the power supplying connector. The power supplying connector includes a locking lever and a microswitch. When both connectors are provisionally coupled with each other, a securing piece at the one end of the locking lever runs over a securing protrusion of the power receiving connector so that the pressing potion at the other end of the locking lever presses a switch spring of the microswitch to be turned off, thereby giving rise to no energization of the charging connector device. When both connectors are completely coupled with each other, the lever is elastically restored by the action of a coil spring, thus energizing the connector device.

### DISCLOSURE OF THE INVENTION

The present invention has been made in the light of the above-mentioned problem, and it is an object thereof to provide a connector, which can further enhance electric safety while improving usability, for electrical connection for an electrically driven vehicle.

A connector for electrical connection for an electrically driven vehicle, according to a first aspect of the present invention, is configured to electrically connect the electrically driven vehicle, which includes a power storage portion, with a power apparatus. The power apparatus is configured to control at least one of supplying of electric power to the electrically driven vehicle and supplying of electric power from the electrically driven vehicle. The connector includes a contact portion and a main body. The contact portion is configured to electrically connect an electric cable, electrically connected with one of the electrically driven vehicle or the power apparatus, with the other of the electrically driven vehicle or the power apparatus. The main body houses therein the contact portion, a power cutoff portion and a first abnormality detector. The power cutoff portion is configured to switch opening/closing of a feed line between the electrically driven vehicle and the power apparatus. The first abnormality detector is configured to detect an abnormality that occurs in the feed line, or externally receive an abnormal signal. The power cutoff portion is configured to open the feed line, when the first abnormality detector detects the abnormality or receives the abnormal signal. The first abnormality detector is configured to detect, as the abnormality, at least one of a short-circuit current in the feed line and an overload current in the feed line.

As a connector for electrical connection for an electrically driven vehicle according to a second aspect of the present invention, in the first aspect, the power cutoff portion includes an electric conductor connected in series with the electric cable, and the power cutoff portion is configured to switch opening/closing of the feed line by bringing a first end of the electric conductor into contact with a second end of the electric conductor or releasing the electric conductor from a contact state. The main body further houses therein an abnormality transmitter and a switching mechanism. The abnormality transmitter is configured to mechanically release the electric conductor from the contact state, when the first abnormality detector detects the abnormality or receives the abnormal signal. The switching mechanism is configured to mechanically bring the first end of the electric conductor into contact with the second end of the electric conductor or release the electric conductor from the contact state, in a state where the first abnormality detector detects no abnormality and receives no abnormal signal.

As a connector for electrical connection for an electrically driven vehicle according to a third aspect of the present invention, in the second aspect, when the contact portion is connected with the electrically driven vehicle or the power apparatus, the switching mechanism is configured to bring the first end of the electric conductor into contact with the second end of the electric conductor after connection of the contact portion is completed, and when the contact portion is disconnected with the electrically driven vehicle or the power apparatus, the switching mechanism is configured to release the electric conductor from the contact state before disconnection of the contact portion is completed.

As a connector for electrical connection for an electrically driven vehicle according to a fourth aspect of the present invention, in any one of the first to third aspects, the first abnormality detector is configured to further detect, as the abnormality, at least one of a ground fault current in the feed line, a leakage current in the feed line, a connection failure of the contact portion, and a temperature abnormality that occurs at the contact portion.

As a connector for electrical connection for an electrically driven vehicle according to a fifth aspect of the present invention, the connector in any one of the second to fourth aspects further includes a signal receiver configured to receive the abnormal signal that is output from a second abnormality detector provided outside the main body. The abnormality transmitter is configured to release the electric conductor from the contact state when the signal receiver receives the abnormal signal.

As a connector for electrical connection for an electrically driven vehicle according to a sixth aspect of the present invention, in any one of the second to fifth aspects, the electric conductor includes: a fixed contactor; and a movable contactor to be separably brought into contact with the fixed contactor. The electric conductor is housed in a first casing formed of insulating material. The power cutoff portion further includes a pair of permanent magnets and a yoke. The permanent magnets are disposed while an N-pole of one of the permanent magnets faces an S-pole of the other of the permanent magnets so as to hold, between the permanent magnets, an electric arc that is generated by the movable contactor being separated from the fixed contactor. The yoke is magnetically connected with the permanent magnets so as to form a magnetic path together with the permanent magnets. The yoke is disposed outside the first casing, and the permanent magnets are disposed at portions outside the first casing, corresponding to the fixed contactor and the movable contactor.

As a connector for electrical connection for an electrically driven vehicle according to a seventh aspect of the present invention, in the sixth aspect, the first casing is configured as a second casing housing therein at least the power cutoff portion, the first abnormality detector, the abnormality transmitter and the switching mechanism.

As a connector for electrical connection for an electrically driven vehicle according to an eighth aspect of the present invention, in the sixth or seventh aspect, the permanent magnets are disposed near the fixed contactor so as to turn according to operation of the switching mechanism to change a direction of a magnetic field.

As a connector for electrical connection for an electrically driven vehicle according to a ninth aspect of the present invention, in any one of the sixth to eighth aspects, the power cutoff portion further includes an extinguishing portion. The extinguishing portion includes an arc running plate and an extinguishing grid plate. The arc running plate is configured to transfer the electric arc generated by the movable contactor being separated from the fixed contactor. The extinguishing grid plate is configured to extinguish the electric arc transferred by the arc running plate.

As a connector for electrical connection for an electrically driven vehicle according to a tenth aspect of the present invention, in the first aspect, the power cutoff portion includes a switch and an on/off-switching portion. The switch is connected in series with the electric cable. The on/off-switching portion is configured to switch on/off of the switch to switch opening/closing of the feed line. The main body houses therein a switch-off portion that is configured to turn off the switch, when the first abnormality detector detects the abnormality or receives the abnormal signal.

As a connector for electrical connection for an electrically driven vehicle according to an eleventh aspect of the present invention, in the tenth aspect, when the contact portion is connected with the electrically driven vehicle or the power apparatus, the on/off-switching portion is configured to turn on the switch after connection of the contact portion is completed, and when the contact portion is disconnected with the electrically driven vehicle or the power apparatus, the on/off-switching portion is configured to turn off the switch before disconnection of the contact portion is completed.

As a connector for electrical connection for an electrically driven vehicle according to a twelfth aspect of the present invention, in the tenth or eleventh aspect, the first abnormality detector is configured to further detect, as the abnormality, at least one of a ground fault current in the feed line, a leakage current in the feed line, a connection failure of the contact portion, and a temperature abnormality that occurs at the contact portion.

### BRIEF DESCRIPTION OF THE DRAWINGS

FIG. 1 is a schematic block diagram illustrating one example of a connector for electrical connection for an electrically driven vehicle according to an embodiment;
FIG. 2 is a schematic block diagram illustrating another example of the connector for electrical connection according to the embodiment;
FIG. 3 is a schematic block diagram illustrating yet another example of the connector for electrical connection according to the embodiment;
FIG. 4 is an external perspective view of the connector for electrical connection according to the embodiment;
FIG. 5 is an overall perspective view of an internal structure of the connector for electrical connection according to the embodiment;
FIG. 6 is a front view of an internal structure of a contact mechanism portion in the connector for electrical connection according to the embodiment;
FIG. 7 is an overall perspective view of one example of a DC extinguishing device used for the contact mechanism portion in the connector for electrical connection according to the embodiment;
FIG. 8 is an explanatory drawing for a procedure for connecting, with the electrically driven vehicle, the connector for electrical connection according to the embodiment;
FIG. 9 is an explanatory drawing for the procedure for connecting, with the electrically driven vehicle, the connector for electrical connection according to the embodiment;
FIG. 10 is an explanatory drawing for the procedure for connecting, with the electrically driven vehicle, the connector for electrical connection according to the embodiment;
FIG. 11 is an overall perspective view of another example of the contact mechanism portion in the connector for electrical connection according to the embodiment;
FIG. 12 is a plan view of another example of the DC extinguishing device used for the contact mechanism portion in the connector for electrical connection according to the embodiment;
FIG. 13 is a partially enlarged view of yet another example of the DC extinguishing device used for the contact mechanism portion in the connector for electrical connection according to the embodiment;
FIG. 14 is a partially enlarged view of yet another example of the DC extinguishing device used for the contact mechanism portion in the connector for electrical connection according to the embodiment;
FIG. 15 is a schematic diagram illustrating another example of a power cutoff portion in the connector for electrical connection according to the embodiment; and
FIG. 16 is an external perspective view of another example of the connector for electrical connection according to the embodiment.

### EMBODIMENTS FOR CARRYING OUT THE INVENTION

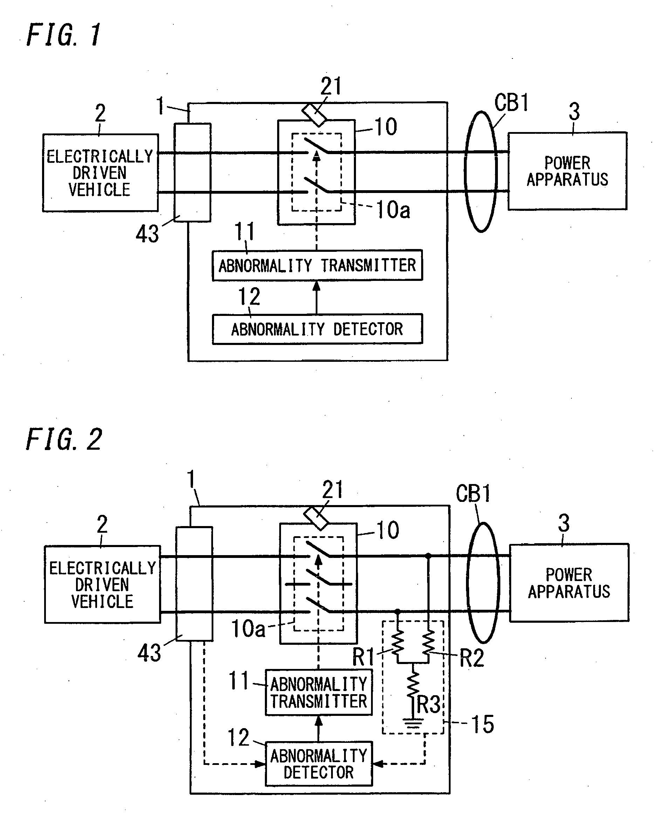

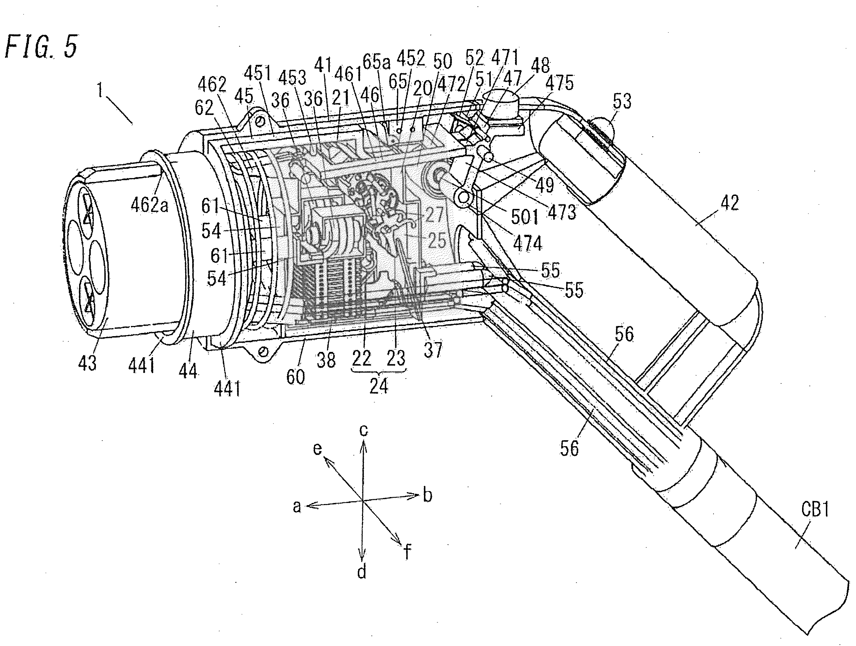

A connector **1** for electrical connection for an electrically driven vehicle (hereinafter, referred to as "connector **1** for electrical connection") according to an embodiment will be described below with reference to FIGs. 1 to 16. For example as shown in FIG. 1, the connector **1** for electrical connection according to the embodiment is used for electrically connecting an electrically driven vehicle **2** with a power apparatus **3** to supply electric power from the power apparatus **3** to the electrically driven vehicle **2**, or supply electric power from the electrically driven vehicle **2** to the power apparatus **3.** In the following description, unless otherwise specified, **a-b**, **c-d** and **e-f** directions shown in FIG. 5 are defined as front-back, up-down and left-right directions, respectively.

Examples of the electrically driven vehicle **2** include an electric vehicle (EV) including as a power source only an electric motor, and a plug-in hybrid electric vehicle (PHEV) including as a power source an engine and an electric motor. A storage battery (not shown) is mounted in all of such vehicles.

The power apparatus **3** is for example a DC/AC power converter, and configured to convert, into DC power, AC power received from a commercial power supply, and supply the DC power to the storage battery of the electrically driven vehicle **2.**

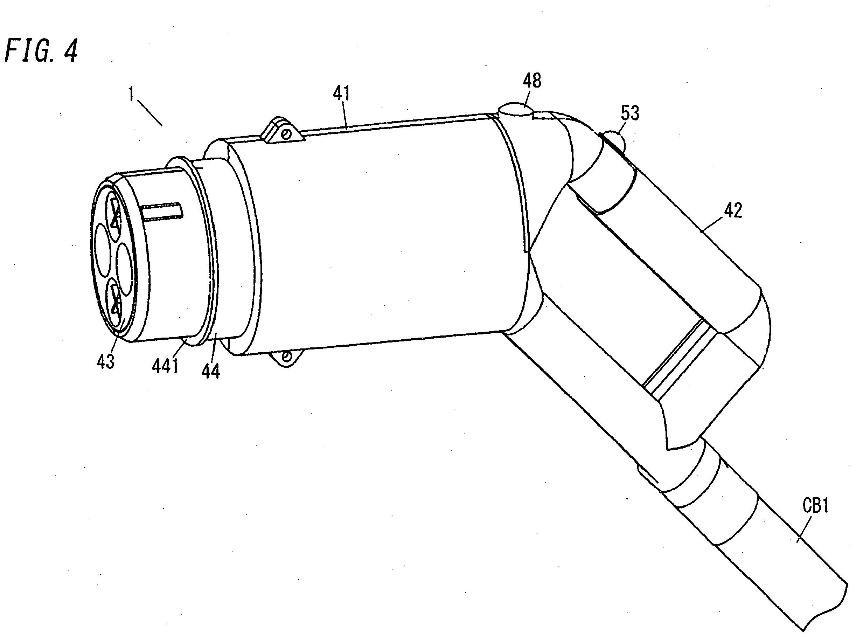

FIG. 4 is an external perspective view of the connector **1** for electrical connection. The size of the connector **1** for electrical connection is designed to the extent that an operator can connect it with a connector of the electric vehicle (EV) while holding with the operator's hand.

FIG. 1 is a schematic block diagram illustrating one example of the connector **1** for electrical connection according to the embodiment. The connector **1** for electrical connection includes a contact portion **43**, a power cutoff portion **10**, an abnormality transmitter **11**, an abnormality detector **12** and a handle **21**, and those components are housed in a main body **41** (see FIG. 4). The connector **1** for electrical connection is electrically connected with the power apparatus **3** through an electric cable **CB1.**

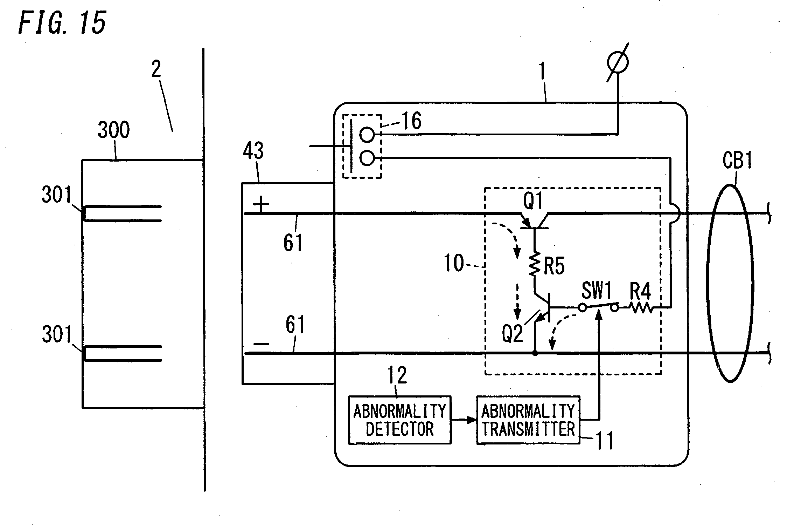

The contact portion **43** is configured to be removably inserted in and connected with a vehicle side inlet **300** (see FIG. 15) of the electrically driven vehicle **2.** The electrically driven vehicle **2** is electrically connected with the power apparatus **3** by the contact portion **43** being connected with the vehicle side inlet **300.**

The power cutoff portion **10** includes a pair of electric conductors **10a**, which are respectively connected in series with two wires of the electric cable **CB1.** The power cutoff portion **10** is configured to switch opening/closing of a feed line between the electrically driven vehicle **2** and the power apparatus **3** by bringing a first end of the electric conductor **10a** into contact with a second end of the electric conductor **10a** or releasing the electric conductor **10a** from a contact state.

The abnormality detector **12** is configured to detect an abnormality (such as a short-circuit current or an overload current) that occurs in the feed line between the electrically driven vehicle **2** and the power apparatus **3.** Here in the embodiment, the abnormality detector **12** corresponds to a first abnormality detector.

The abnormality transmitter **11** has a function of mechanically releasing the electric conductor(s) **10a** of the power cutoff portion **10** from the contact state. When the abnormality detector **12** detects the above abnormality, the abnormality transmitter **11** mechanically releases the electric conductor(s) **10a** from the contact state to open the feed line. Accordingly, supplying of electric power from the power apparatus **3** to the electrically driven vehicle **2** is stopped.

The handle **21** has a function of mechanically bringing first ends of the electric conductors **10a** of the power cutoff portion **10** into contact with second ends of the electric conductors **10a**, and a function of mechanically releasing the electric conductors **10a** from the contact state. The handle **21** is configured to bring the first ends of the electric conductors **10a** into contact with the second ends of the electric conductors **10a** or release the electric conductors **10a** from the contact state for closing or opening of the feed line, in a state where the abnormality detector **12** detects no abnormality.

FIG. 5 is an overall perspective view of an internal structure of the connector **1** for electrical connection according to the embodiment. The connector **1** for electrical connection further includes a slide lever **45**, a lock lever **46**, a release lever **47**, a solenoid device **50**, a contact mechanism portion **60** and a microswitch **65**, and those components are housed in the main body **41** formed into a cylindrical shape.

Further, a U-shaped handle **42** is provided at a rear end portion of the main body **41** while formed integrally with the rear end portion. The electric cable **CB1** is in a state of being led out from a rear end portion of the handle **42.** The electric cable **CB1** includes a first cable **55** for supplying electric power, and a second cable **56** for transmitting signal. The handle **42** is provided with an LED lamp **53.** By the LED lamp **53**, a locking state and an abnormality state are indicated.

The slide lever **45** includes a lever main body **451** formed as a rectangle plate extending in the front-back direction. The lever main body **451** is provided at a rear end portion thereof with an engagement projection **452.** The lever main body **451** is further provided at a middle portion thereof with a flange **453** projecting downward. The slide lever **45** is provided integrally with a rear end portion of a tubular body **44.** The tubular body **44** is provided at both ends thereof in the front-back direction with flange portions **441**, respectively. The slide lever **45** is configured to slide in the front-back direction by the tubular body **44** sliding in the front-back direction with respect to the main body **41.**

The tubular body **44** is in a state of receiving elastic force applied toward the front direction, depending on spring force of a return spring **62.** In a state where the connector **1** for electrical connection is not connected with the vehicle side inlet **300**, the back side flange portion **441** is in a state of abutting on a front surface of the main body **41** from the inside of the main body **41** (see FIG. 5).

The lock lever **46** is for locking the connector **1** for electrical connection to the vehicle side inlet **300** (see FIG. 15) of the electrically driven vehicle **2.** The lock lever **46** includes: a first member **461** that is U-shaped and extends in the front-back direction; and a second member **462** that is bar-shaped and mounted to an end portion (front end portion) of the first member **461.** The second member **462** is provided at an end portion thereof with an engagement projection **462a.**

The second member **462** is in a state of receiving elastic force applied upward by a torsion spring. When the tubular body **44** is moved backward, the engagement projection **462a** is moved upward, depending on the elastic force. Further, when a release button **48** described later is pressed, a rear portion of the first member **461** is pushed up by the release lever **47** being moved upward, and accordingly, the second member **462** is pushed down.

According to the lock lever **46**, the connector **1** for electrical connection is locked to the vehicle side inlet **300** by the engagement projection **462a** of the second member **462** being engaged with an engagement groove (not shown) provided in the vehicle side inlet **300.**

The release lever **47** includes a lever main body **471** formed as a rectangle plate extending in the front-back direction. The lever main body **471** is provided at an end portion (front end portion) thereof with an engagement projection **472.** The lever main body **471** is further provided at a rear end portion thereof with a supporting plate **475.** The circular-shaped release button **48** is disposed on an upper surface of the supporting plate **475.** The lever main body **471** is further provided on a lower surface thereof with an extended plate **473** that is inclined obliquely downward. The extended plate **473** is provided at an end portion thereof with a tubular portion **474.**

The release lever **47** is pivotably supported by a shaft member **49** attached to the main body **41.** The release lever **47** is in a state of receiving elastic force applied downward, depending on spring force of a biasing spring **52** that is fixed to a shaft member **51** attached to the main body **41.** Accordingly, in order to operate the release lever **47**, the release button **48** needs to be pressed downward against the spring force of the biasing spring **52.** Then, when the operator's hand is released from the release button **48**, the release lever **47** and the release button **48** are returned to original positions thereof by the spring force of the biasing spring **52.**

The solenoid device **50** includes a pin **501** that is protruded so as to be freely advanced and retreated along the left-right direction. In a state of being advanced, the pin **501** is inserted into the tubular portion **474** of the release lever **47**, and accordingly, the release lever **47** falls in a state of not accepting operation. This is for preventing the connector **1** for electrical connection from being removed from the vehicle side inlet **300** even when the release button **48** is incorrectly pressed during charging of the electrically driven vehicle **2**, for example.

The microswitch **65** includes a bar-shaped lever **65a** for turning on/off a contact (not shown) provided inside the microswitch **65.** The on/off of the contact is switched according to the pressing force applied to the lever **65a** from the slide lever **45.** Specifically, in a state where the connector **1** for electrical connection is not connected with the vehicle side inlet **300**, the pressing force is not applied to the lever **65a** from the slide lever **45**, and accordingly, the contact is in an OFF state.

When the connector 1 for electrical connection is connected with the vehicle side inlet **300**, the pressing force is applied to the lever **65a** from the slide lever **45**, and accordingly, the contact falls in an ON state. A contact signal by the microswitch **65** is output to the solenoid device **50.** When the contact of the microswitch **65** is turned on, the solenoid device **50** is driven and the pin **501** falls in the advanced state.

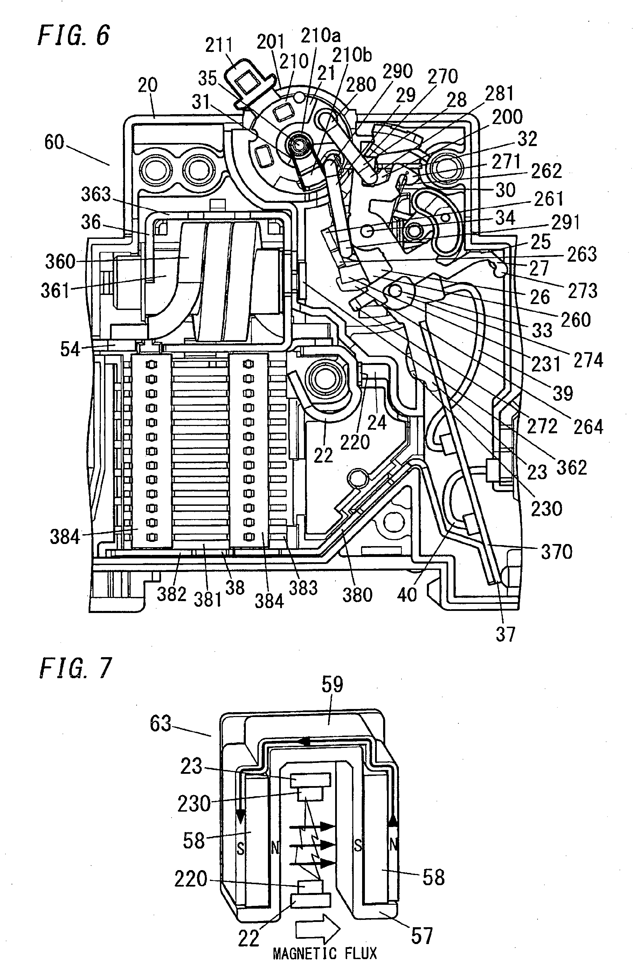

As shown in FIG. 6, the contact mechanism portion **60** includes a contact mechanism **24** and a link mechanism **25.** The contact mechanism **24** includes two sets, each of which includes a fixed contact **220** and a movable contact **230.** The link mechanism **25** includes the handle **21** that is provided with an operation knob **211.** The electrically connections between the fixed contacts **220** and the movable contacts **230** are switched on/off by the handle **21.**

The contact mechanism portion **60** further includes a trip mechanism (electromagnetic releasing portions **36** and thermal releasing portions **37**) and extinguishing devices **38.** When detecting an abnormal current (a short-circuit current and an overload current) between the fixed contact **220** and the movable contact **230**, the trip mechanism is configured to allow the link mechanism **25** to perform trip operation to forcibly open a contact. Each extinguishing device **38** is configured to rapidly extinguish an electric arc that is generated when the contact is opened. Those components are housed in a housing **20** formed as a rectangle box.

The contact mechanism **24** further includes two sets, each of which includes: a fixed contact plate **22** on which a fixed contact **220** is provided; and a movable bar **23** on which a movable contact **230** is provided. The fixed contact plates **22** and the movable bars **23** are formed by punching and bending metal plates with prescribed thicknesses.

The movable bars **23** are T-shaped, and the movable contacts **230** are disposed on lower portions of the movable bars **23.** Each movable bar **23** is provided on a right side of an upper portion thereof with a spring receiving piece (not shown), and further on a left side of the upper portion with a stopper piece **231.** Further, one end of a braided wire **39** is secured to a middle portion of the movable bar **23** in a length direction (the up-down direction). By linking with the link mechanism **25**, each movable bar **23** is movable between a position where the movable contact **230** is in contact with the fixed contact **220** and a position where the movable contact **230** is separated from the fixed contact **220.**

Here in the embodiment, the fixed contact **220** corresponds to a fixed contactor, and the movable contact **230** corresponds to a movable contactor. In the embodiment, the respective electric conductors **10a** are constituted by the two sets, each of which includes the fixed contact **220** and the movable contact **230.** The power cutoff portion **10** is constituted by the fixed contact plates **22** and the movable bars **23.**

The link mechanism **25** includes the handle **21**, supporting arms **26**, latch members **27**, first link members **28**, second link members **29**, latch springs **30**, link springs **31**, a handle spring **32**, pressure springs (not shown), first turning shafts **33** and second turning shafts **34.**

The handle **21** includes: a main body **210** that is formed of synthetic resin into an approximately cylindrical shape; and the operation knob **211** that has approximately rectangular parallelepiped shape and is provided on an outer peripheral surface of the main body **210.** The main body **210** is provided with a shaft hole **210a** formed along a central axis of the main body **210.** Further, the main body **210** is provided in each of both side surfaces thereof (e.g., a front surface in FIG. 6) with a guide groove **210b** which extends along a circumferential direction.

The handle **21** is pivotably supported by a handle shaft **35** attached to the housing **20** in a state where the operation knob **211** is exposed through an operation opening **201** of the housing **20.** The operation knob **211** is pivotably between an opening position where the contact mechanism **24** is made to be opened and a closing position where the contact mechanism **24** is made to be closed.

The supporting arms **26** and the latch members **27** are formed by punching and bending metal plates with prescribed thicknesses. The first and second link members **28** and **29** are formed into approximately U-shapes by bending both ends of metal round bars in one direction. The latch springs **30**, the link springs **31**, the handle spring **32** and the pressure springs are provided as torsion coil springs, each of which has both ends projecting in mutually reverse directions. The first and second turning shafts **33** and **34** are formed of metal round bars.

Each supporting arm **26** includes a pair of side plates **260** (FIG. 6 shows only a side plate on a near side) arranged in the left-right direction (a direction perpendicular to a paper plane of FIG. 6). The side plates **260** are coupled to each other via a middle piece **261.** One of the side plates **260** (on the near side) is provided at an upper end thereof with an engagement projecting piece **262** extending obliquely upward. The other of the side plates **260** (on a far side) is provided at an approximately center of a side edge thereof with a projecting piece **264** that is approximately L-shaped, of which an end projects upward.

Further, the middle piece **261** is provided at a lower end thereof with an engagement piece **263** that projects downward to face the stopper piece **231** of the corresponding movable bar **23.** The first turning shaft **33** and the second turning shaft **34** are respectively inserted into holes provided in the corresponding supporting arm **26.** The supporting arms **26** are pivotably supported by the second turning shafts **34** attached to the housing **20.**

The upper portion of each movable bar **23** is interposed between the side plates **260** of the corresponding supporting arm **26.** The movable bars **23** are pivotably supported by the supporting arms **26** via the first turning shafts **33.** When the supporting arm **26** is turned around the second turning shaft **34**, the movable bar **23** is moved together with the supporting arm **26.**

Each latch member **27** is provided on one side (a left side in FIG. 6) of an upper portion thereof with a pawl piece **270** that is L-shaped, and on the other side (a right side in FIG. 6) of the upper portion with a spring receiving piece **271** that is L-shaped. Each latch member **27** is further provided with a first pressing piece **272** that extends from an edge on one side of a lower portion of the latch member **27.** Each latch member **27** is further provided with a second pressing piece **273** that is approximately L-shaped and extends from an edge on the other side of the lower portion.

The respective second turning shafts **34** are inserted into holes provided in approximately central portions of the latch members **27.** The latch members **27** are pivotably supported by the second turning shafts **34.** Each latch member **27** is provided at a lower end portion thereof with a cutout portion **274** that is approximately rectangle-shaped. The first turning shafts **33** are engaged with the cutout portions **274.**

Each first link member **28** includes an upper leg portion **280** and a lower leg portion **281.** The upper leg portion **280** is pivotably supported by a shaft hole (not shown) provided in the handle **21.** The lower leg portion **281** is removably engaged with an engagement portion **200** that is constituted by the pawl piece **270** of the latch member **27** and the engagement projecting piece **262** of the supporting arm **26.** Each second link member **29** includes an upper leg portion **290** and a lower leg portion **291.** The respective upper leg portions **290** are engaged into the guide grooves **210b** of the handle **21.** The respective lower leg portions **291** are hooked and locked to the engagement pieces **263** of the supporting arms **26.**

The respective second turning shafts **34** are inserted into winding parts of the latch springs **30.** One ends of the latch springs **30** are respectively locked to the spring receiving pieces **271** of the latch members **27.** Accordingly, the respective latch springs **30** are in states of applying elastic force clockwise (clockwise in FIG. 6) against the latch members **27.** The handle shaft **35** is inserted into winding parts of the link springs **31.** One end portions of the link springs **31** are disposed so as to abut on the handle **21** while the other end portions of the link springs **31** respectively abut on the upper leg portions **290** of the second link members **29.** Accordingly, the respective link springs **31** are in states of applying elastic force in the right direction against the second link members **29.**

Each electromagnetic releasing portion **36** as one constituent element of the trip mechanism includes a coil **360** as a flat-type winding, a coil bobbin **361**, a fixed iron core and a movable iron core (not shown) formed of magnetic material, a return spring (not shown), a pressing pin **362** coupled to the movable iron core, and a yoke **363.** The respective fixed contact plates **22** are fixed to one ends of the coils **360**, and respective terminal plates **54** are fixed to the other ends of the coils **360.**

Each yoke **363** is formed of magnetic material and has a hollow rectangular-frame shape with a cutout part. The respective coil bobbins **361** are disposed so as to be surrounded by the yokes **363.** Each yoke **363** is provided in a rear end portion (a right end portion in FIG. 6) thereof with a through-hole (not shown) into which the corresponding pressing pin **362** is inserted.

Regarding each electromagnetic releasing portion **36**, in a state where no current flows through the coil **360**, the movable iron core is separated from the fixed iron core by spring force of the return spring, and the pressing pin **362** coupled to the movable iron core is in a retracted state, as shown in FIG. 6. In this state, when an excessive current such as a short-circuit current flows through the coil **360**, the movable iron core is moved so as to come closer to the fixed iron core against the spring force of the return spring, and accordingly, the pressing pin **362** coupled to the movable iron core is projected backward (in the right direction in FIG. 6).

Then, an end portion of the pressing pin **362** presses the first pressing piece **272** of the latch member **27** backward, and the movable bar **23** is moved backward together with the latch member **27**, and accordingly, the movable contact **230** is separated from the fixed contact **220.** Therefore, the feed line of electric power to be fed from the power apparatus **3** to the electrically driven vehicle **2** is cut off, and supplying to the electrically driven vehicle **2** is stopped.

Each thermal releasing portion **37** as the other constituent element of the trip mechanism includes a bimetal plate **370** that is strip-shaped, as shown in FIG. 6. Examples of the bimetal plate **370** include a directly heated type of bimetal plate that is curved by self-heating, and an indirectly heated type of bimetal plate that is curved by heating from a plate-shaped heater stacked on the bimetal plate. One ends of the braided wires **39** are secured to the movable bars **23**, and the other ends of the braided wires **39** are secured to middle portions of bimetal plates **370**, respectively. One ends of braided wires **40** are secured to lower portions of the bimetal plates **370**, respectively.

In normal situation, the bimetal plates **370** are in non-curved states. When an excessive current such as an overload current flows through the bimetal plate **370**, temperature of the bimetal plate **370** is increased due to the overload current, and accordingly, the bimetal plate **370** is curved. Then, according to curving of the bimetal plate **370**, an end portion (an upper end portion) of the bimetal plate **370** presses the second pressing piece **273** of the latch member **27** backward (toward the right side in FIG. 6), and the movable bar **23** is moved backward together with the latch member **27**, and accordingly, the movable contact **230** is separated from the fixed contact **220.**

Therefore, the feed line of electric power to be fed from the power apparatus **3** to the electrically driven vehicle **2** is cut off, and supplying to the electrically driven vehicle **2** is stopped. In the embodiment, the abnormality transmitter **11** and the abnormality detector **12** are constituted by the electromagnetic releasing portion **36** and the thermal releasing portion **37.**

As shown in FIG. 6, each extinguishing device **38** includes an arc running plate **380** and an extinguishing grid **381.** The arc running plate **380** is formed by bending a strip-shaped metal plate. One end of the arc running plate **380** is coupled to a base portion of the bimetal plate **370.** The arc running plate **380** is provided at the other end thereof with an extinguishing piece **382.**

The extinguishing grid **381** includes: a plurality of extinguishing plates **383**, as a plurality of conductive plates arranged in parallel at prescribed intervals in the up-down direction; and two supporting plates **384**, **384** formed of insulating material. The supporting plates **384**, **384** cover both side surfaces of the plurality of extinguishing plates **383** in width directions thereof to hold the plurality of extinguishing plates **383** at the prescribed intervals. The extinguishing grid **381** is disposed between the extinguishing piece **382** and a lower side portion of the yoke **363.** Here in the embodiment, the extinguishing device **38** corresponds to an extinguishing portion.

Next, operation of the contact mechanism portion **60** will be described. FIG. 6 shows a state where the contact mechanism **24** is opened. In this state, when the main body **210** of the handle **21** is turned clockwise, the engagement projecting pieces **262** of the supporting arms **26** are pressed rightward by the lower leg portions **281** of the first link members **28.** Accordingly, the respective supporting arms **26** are turned clockwise around the second turning shafts **34.** At this time, the movable bars **23** pivotably supported by the first turning shafts **33** are also moved leftward according to moving of the supporting arms **26**, respectively.

Here, regarding each second link member **29**, when being on a right side of a line segment between the lower leg portion **291** and the handle shaft **35**, the upper leg portion **290** is moved downward by turning of the handle **21.** At this time, the lower leg portions **291** of the second link members **29** press the stopper pieces **231** of the movable bars **23** downward, respectively. In other words, the movable bars **23** are pressed counterclockwise by the lower leg portions **291** of the second link members **29**, while receiving elastic force clockwise around the first turning shafts **33** from the pressure springs (not shown), respectively.

In this state, when the handle **21** is further turned clockwise, the upper leg portion **290** of each second link member **29** is moved toward a left side of the line segment between the lower leg portion **291** and the handle shaft **35.** Therefore, the second link members **29** are pulled up. At this time, the lower leg portions **291** of the second link members **29** are moved upward, and the pressing force against the stopper pieces **231** of the movable bars **23 is** eliminated, and accordingly, the movable bars **23** are respectively rapidly turned clockwise around the first turning shafts **33** by spring force of the pressure springs. Therefore, the respective movable contacts **230** vigorously abut on the fixed contacts **220.**

Electric arc generation can be suppressed by the respective movable contacts **230** coming into contact with the fixed contacts **220** in a short time as described above. The latch members **27** are turned clockwise by spring force of the latch springs **30.**

In a state where the contact mechanism **24** is closed, when the main body **210** of the handle **21** is turned counterclockwise, the lower leg portions **281** of the first link members **28** are pulled up. Accordingly, pressing force of the first link members **28** against the supporting arms **26** is eliminated. The movable bars **23** are respectively turned clockwise around the first turning shafts **33** by spring force of the pressure springs, and the supporting arms **26** are respectively turned counterclockwise around the second turning shafts **34** by spring force of the pressure springs.

The supporting arms **26** are stopped when the first turning shafts **33** are moved to positions of rear ends (positions of right ends in FIG. 6) of guide ribs (not shown). The movable bars **23** are stopped at positions where the stopper pieces **231** abut on the engagement pieces **263** of the supporting arms **26**, respectively. Therefore, the respective movable contacts **230** are separated from the fixed contacts **220.**

Here, the handle **21** is biased by the handle spring **32** toward an open position where the contact mechanism is opened (i.e., counterclockwise). When the upper leg portion **280** of each first link member **28** is moved from a left side of a line segment between the handle shaft **35** and the lower leg portion **281** of the each first link member **28** to a right side of the line segment from a left side thereof, the handle **21** is rapidly turned toward the open position where the contact mechanism is opened. Therefore, the respective movable contacts **230** are rapidly separated from the fixed contacts **220**, and the electric arc generation can be suppressed. The latch members **27** are pulled by the lower leg portions **281** of the first link members **28**, and turned counterclockwise around the second turning shafts **34**, respectively.

Here, in a case where electric power to be supplied from the power apparatus **3** to the electrically driven vehicle **2** is DC power, arc drive force may not be sufficiently obtained in a small current region, and thereby an electric arc may not be guided to an extinguishing grid. In this case, it is impossible to cut off the electric arc. In order to solve this problem, in the embodiment, a DC extinguishing device **63** shown in FIG. 7 is provided to achieve cutting off of the electric arc even in the small current region.

The DC extinguishing device **63** includes a pair of permanent magnets **58**, **58** that are plate-shaped, a yoke **59** that is U-shaped, and a casing **57** (first casing) in which the fixed contact plates **22** and the movable bars **23** are housed. The permanent magnets **58**, **58** are disposed outside the casing **57** so that the fixed contact plates **22** and the movable bars **23** arranged in the up-down direction are between the permanent magnets **58**, **58** in the left-right direction. Further, each permanent magnet **58** is disposed so that an S-pole thereof faces left and an N-pole thereof faces right.

The yoke **59** is disposed outside the casing **57** so as to hold the pair of the permanent magnets **58**, **58** from the left side and the right side of the pair. Therefore, a magnetic path is formed in the permanent magnets **58**, **58** and the yoke **59**, and, as shown in FIG. 7, a magnetic field toward the right permanent magnet **58** from the left permanent magnet **58** is formed inside the casing **57.** Then, the electric arc generated between the movable contact **230** and the fixed contact **220** is extended and cut off by electromagnetic force applied in a direction perpendicular to a paper plane of FIG. 7.

In this way, according to the DC extinguishing device **63**, the electric arc can be extended and cut off by the electromagnetic force even in the small current region. Note that, this DC extinguishing device **63** is housed in the housing **20** so that the fixed contact plates **22** and the movable bars **23** are arranged in the casing **57.** Here, portions corresponding to the fixed contact plate **22** and the movable bar **23** are, as shown in FIG. 7, defined as portions where the permanent magnets **58**, **58** are disposed so that a direction of a magnetic flux by the permanent magnets **58**, **58** is orthogonal to a movement direction of the movable contact **230** with respect to the fixed contact **220** (i.e., the up-down direction in FIG. 7).

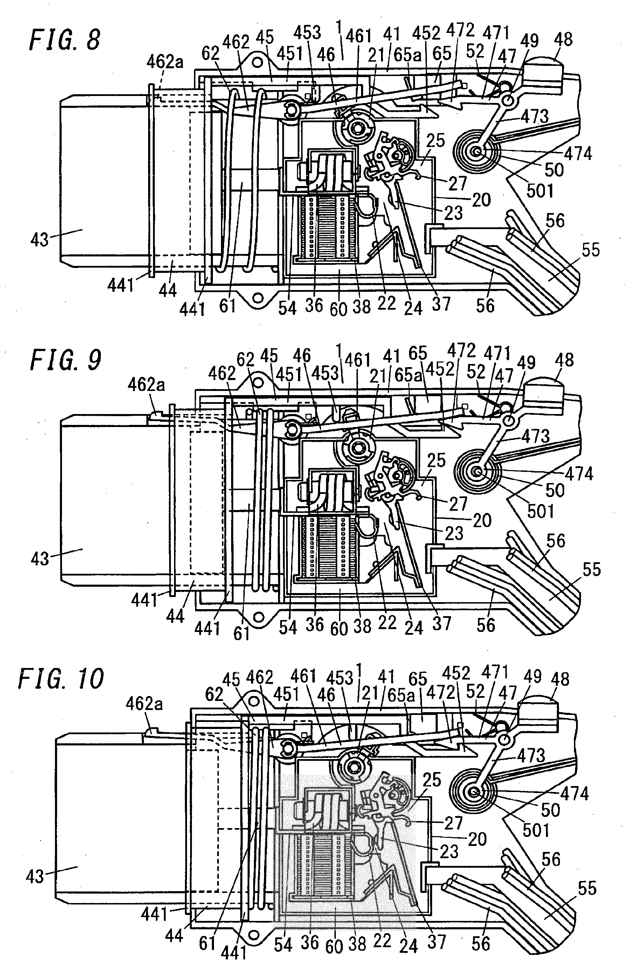

Next, operation of the connector **1** for electrical connection will be described with reference to FIGs. 8 to 10.

FIG. 8 shows the connector **1** for electrical connection in a state before being connected to the vehicle side inlet **300** (see FIG. 15) of the electrically driven vehicle **2.** In this state, because the handle **21** of the contact mechanism portion **60** is at the open position where the contact mechanism is opened, the movable contacts **230** are respectively in states of being separated from the fixed contacts **220.** At this time, because the lever **65a** of the microswitch **65** receives no pressing force from the slide lever **45**, its contact (not shown) is OFF, and the pin **501** of the solenoid device **50** is in a retreated state. Note that, because operation of the contact mechanism portion **60** is already described above, explanation thereof is omitted here.

When an operator inserts the contact portion **43** into the vehicle side inlet **300** of the electrically driven vehicle **2**, the tubular body **44**, as shown in FIG. 9, is pressed backward against the spring force of the return spring **62**, and the slide lever **45** is moved backward. At this time, the engagement projection **462a** of the second member **462** is pressed upward by receiving the elastic force of the torsion spring. At this time, although the handle **21** is pressed backward by the flange **453** of the slide lever **45**, the handle **21** is not still moved to the close position where the contact mechanism is closed. That is, the movable contacts **230** are respectively still in the states of being separated from the fixed contacts **220.**

When the operator inserts the contact portion **43** to a prescribed position in the vehicle side inlet **300**, the front side flange portion **441** of the tubular body **44** as shown in FIG. 10 abuts on the front surface of the main body **41**, and the engagement projection **452** of the slide lever **45** is engaged with the engagement projection **472** of the release lever **47.** At this time, the handle **21** of the contact mechanism portion **60** is moved to the close position where the contact mechanism is closed, by receiving the pressing force of the flange **453**, and accordingly, the movable contacts **230** come into contact with the fixed contacts **220.**

Further at this time, the engagement projection **462a** of the second member **462** of the lock lever **46** is engaged with an engagement groove (not shown) provided in the vehicle side inlet **300**, and accordingly, the connector **1** for electrical connection is locked to the vehicle side inlet **300.** Further at this time, the lever **65a** of the microswitch **65** is pressed backward by the slide lever **45**, and the contact of the microswitch **65** is turned on. According to turning on of the contact of the microswitch **65**, the pin **501** of the solenoid device **50** is advanced, and inserted into the tubular portion **474** of the release lever **47.** Therefore, the release lever **47** falls in a state of not accepting operation.

When charging to the electrically driven vehicle **2** is completed, a charging completion signal is output from the side of the electrically driven vehicle **2.** The solenoid device **50** is driven in response to this charging completion signal, and the pin **501** falls in the retreated state. Then, the engagement state between the engagement projection **452** of the slide lever **45** and the engagement projection **472** of the release lever **47** is released by the operator pressing the release button **48** downward. At this time, the second member **462** of the lock lever **46** is pressed downward, and thereby, the engagement state between the engagement projection **462a** and the engagement groove is also released.

Then, the operator can remove the connector **1** for electrical connection by pulling it toward oneself. At this time, the tubular body **44** and the slide lever **45** are moved forward by the spring force of the return spring **62**, and the handle **21** is moved to the open position where the contact mechanism is opened by receiving force applied from the slide lever **45.** Therefore, the movable contacts **230** are separated from the fixed contacts **220.** Here in the embodiment, the handle **21**, the slide lever **45** and the release lever **47** constitute a switching mechanism.

When an abnormality is detected by the electromagnetic releasing portion **36** or the thermal releasing portion **37** during charging to the electrically driven vehicle **2**, the movable contact **230** is separated from the fixed contact **220.** At this time, because the slide lever **45** forcibly holds the handle **21** at the close position by applying external force to the handle **21**, the upper leg portion **280** of the first link member **28** is not moved and only the lower leg portion **281** of the first link member **28** is removed from the engagement portion **200** and moved.

There is a margin in a space where the lower leg portion **291** of the second link member **29** is engaged, and accordingly also regarding the second link member **29**, the upper leg portion **290** is not moved and only the lower leg portion **291** is moved in the space. In other words, because the upper leg portion **280** of the first link member **28** and the upper leg portion **290** of the second link member **29**, connected with the handle **21**, are not moved, the handle **21** is maintained at the close position.

Further at this time, the slide lever **45** is not moved forward, and the contact of the microswitch **65** is still in the ON-state, and accordingly, the release lever **47** is in the state of not accepting operation. That is, in this state, the operator cannot remove the connector **1** for electrical connection from the electrically driven vehicle **2.** After that, an abnormal detection signal is output from the side of the electrically driven vehicle **2** that has detected an abnormality. The solenoid device **50** is driven in response to this abnormal detection signal, and the pin **501** falls in the retreated state.

Then, the engagement state between the engagement projection **452** of the slide lever **45** and the engagement projection **472** of the release lever **47** is released by the operator pushing the release button **48** downward. Then, the operator can remove the connector **1** for electrical connection by pulling it toward oneself. At this time, the handle **21** is moved to the prescribed open position by receiving force applied from the slide lever **45**, and accordingly, the trip state caused by the abnormality is released.

Here in the embodiment, in order to suppress electric arc generation at the contact portion **43**, the following measures are taken. First, when the connector **1** for electrical connection is connected with the vehicle side inlet **300**, after contact of contact pins **61** of the contact portion **43** with contact pins **301** (see FIG. 15) of the vehicle side inlet **300** is completed, the movable contacts **230** are brought into contact with the fixed contacts **220.**

Further, when the connector **1** for electrical connection is removed from the vehicle side inlet **300**, after separation of the movable contacts **230** from the fixed contacts **220** is completed, the contact pins **61** of the contact portion **43** are separated from the contact pins **301** of the vehicle side inlet **300.** Therefore, it is possible to suppress an electric arc from generating between the contact pins **61** of the contact portion **43** and the contact pins **301** of the vehicle side inlet **300.**

Thus, according to the embodiment, the main body **41** (including the contact portion **43**, the power cutoff portion **10**, the abnormality transmitter **11**, the abnormality detector **12** and the handle **21**) is provided at an end portion of the electric cable **CB1**, and nothing is interposed in the electric cable **CB1.** For this reason, the operator can easily return the electric cable **CB1** to its original place. Therefore, it is possible to provide the connector **1** for electrical connection improving usability.

In addition, according to the embodiment, it is possible to provide the connector **1** having a protective function with respect to electric power from the side of the electrically driven vehicle **2.** Therefore, even when a short-circuit abnormality or an electrical leakage abnormality occurs in a wiring region between a control box and a connector of the electrically driven vehicle **2**, it is possible to protect circuits. Furthermore, the power cutoff portion **10** and the abnormality detector **12** are provided separately. For this reason, when changing a detection level for a short-circuit current or an overload current, it can be achieved by exchanging only the abnormality detector **12** with another abnormality detector **12.** Therefore, the connector **1** further has an advantage that it is possible to easily change the detection level.

FIG. 2 is a schematic block diagram illustrating another example of the connector **1** for electrical connection according to the embodiment. Regarding the example shown in FIG. 1, the abnormality detector **12** (first abnormality detector) is configured to detect a short-circuit current or an overload current flowing in the feed line. On the other hand, the present example in FIG. 2 further includes a ground circuit **15** including resistors **R1** to **R3**, which is configured to detect a ground fault current or a leakage current.

Further in the present example, a connection failure of the contact portion **43** is detected using a microswitch or the like, and a temperature abnormality of the contact portion **43** is detected using a thermal sensor. Therefore, it is possible to provide the connector **1** for electrical connection, having higher safety than that in FIG. 1.

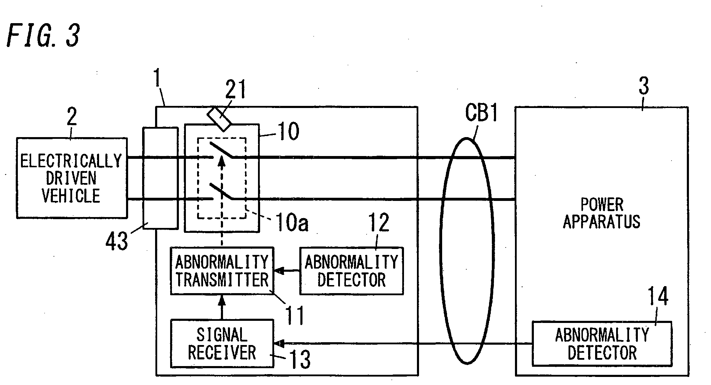

FIG. 3 is a schematic block diagram illustrating yet another example of the connector **1** for electrical connection according to the embodiment. In the present example, the power apparatus **3** is provided with an abnormality detector **14**, and the connector **1** for electrical connection further includes a signal receiver **13** that is configured to receive an abnormal signal to be output from this abnormality detector **14.** When the signal receiver **13** receives the abnormal signal output from the abnormality detector **14**, the abnormality transmitter **11** opens the electric conductor **10a** of the power cutoff portion **10** according to the abnormal signal, and thereby the feed line is opened.

Specifically, the abnormality detector **14** is configured to detect an abnormality occurring in the power apparatus **3** or an abnormality occurring in an electric circuit between the power apparatus **3** and a prescribed power source (not shown) supplying electric power to the power apparatus **3**, and output the abnormal signal to the signal receiver **13.** When the signal receiver **13** receives the abnormal signal, the trip state is spuriously realized by intentionally making an excessive current flow to the coil **360** or the bimetal plate **370**, and thereby the movable contact **230** is separated from the fixed contact **220**, and the feed line is opened.

In this way, the feed line is cut off according to the abnormal signal from the power apparatus **3** provided separately from the connector **1** for electrical connection. Accordingly, it is possible to detect abnormalities over a wider area, and cut off the feed line. Here in the embodiment, the abnormality detector **14** corresponds to a second abnormality detector, and may be configured to detect, as an abnormality, a ground fault current or a leakage current, in addition to a short-circuit current or an overload current similarly to the abnormality detector **12.** Further, the abnormality detector **14** may be configured to detect, as an abnormality, a connection failure or a temperature abnormality of the contact portion **43.**

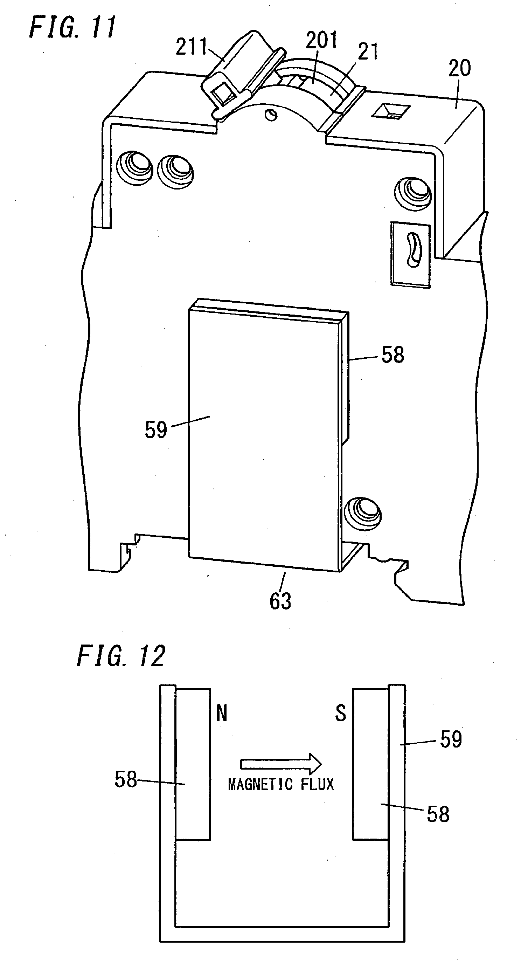

FIGs. 11 and 12 show another example of the DC extinguishing device **63** according to the embodiment, and the housing **20** is utilized, instead of the casing **57** (first casing) in FIG. 7. In this case, as shown in FIG. 11, the housing **20** is held between two portions, extending in parallel, of the U-shaped yoke **59**, and further, the permanent magnets **58**, **58** are disposed at portions corresponding to the fixed contact plates **22** and the movable bars **23** housed in the housing **20.** In this case, the casing **57** is not required, and the cost can be reduced.

Here in the present example, the housing **20** corresponds to a second casing, and portions corresponding to the fixed contact plate **22** and the movable bar **23** are defined as portions where a direction of a magnetic flux by the permanent magnets **58**, **58** is orthogonal to a movement direction of the movable contact **230** with respect to the fixed contact **220.**

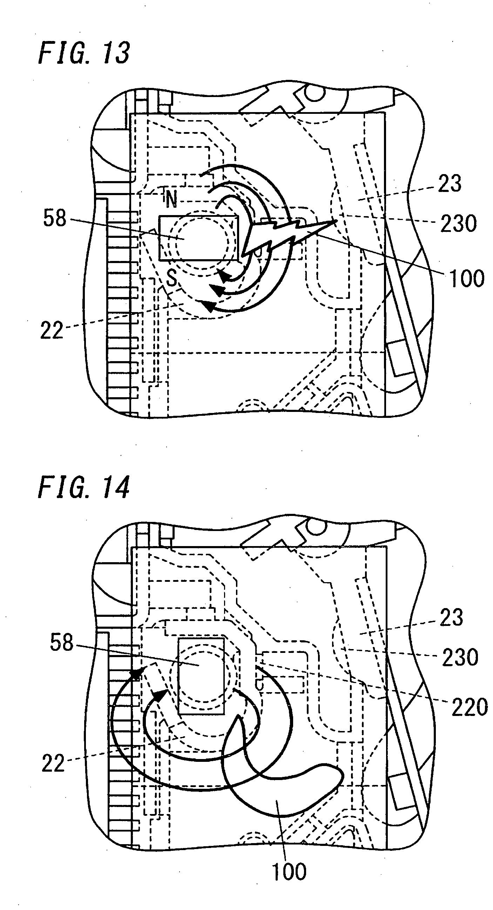

As shown in FIGs. 13 and 14, the permanent magnets **58**, **58** may be disposed to be turned to change the direction of the magnetic field according to the turning operation of the handle **21.** Accordingly, even when arc drive by a self-magnetic field is not achieved due to a relatively-low current, an electric arc **100** can be extended and cut off by an external magnetic field.

FIG. 15 is a schematic diagram illustrating another example of the power cutoff portion **10** in the connector **1** for electrical connection according to the embodiment. In the example already described above, the power cutoff portion **10** includes the pair of electric conductors **10a**, which are respectively connected in series with two wires of the electric cable **CB1.** On the other hand, in the present example, the power cutoff portion **10** includes two transistors **Q1**, **Q2.**

The transistor **Q2** is an npn-type transistor. A base of the transistor **Q2** is connected with an end of a microswitch **16** via a resistor **R4** and a switch **SW1.** An emitter of the transistor **Q2** is connected with a contact pin **61** and a wire of the electric cable **CB1** on the negative side. The transistor **Q1** is a pnp-type transistor. An emitter of the transistor **Q1** is connected with a contact pin **61** on the positive side. A collector of the transistor **Q1** is connected with a wire of the electric cable **CB1** on the positive side.

A base of the transistor **Q1** is connected with a collector of the transistor **Q2** via a resistor **R5.** Another end of the microswitch **16** is connected with a positive power source. Accordingly, when the microswitch **16** is turned on, a current flows between the base and the emitter of the transistor **Q2** via the resistor **R4** and the switch **SW1.**

In the case of this connector **1** for electrical connection, when the contact portion **43** is inserted into the vehicle side inlet **300** of the electrically driven vehicle **2**, the respective contact pins **61** of the contact portion **43** are brought into contact with the contact pins **301** of the vehicle side inlet **300.** Further, when the contact portion **43** reaches the prescribed position in the vehicle side inlet **300**, the microswitch **16** is turned on and accordingly the current flows between the base and the emitter of the transistor **Q2**, and thereby a current path between the collector and the emitter of the transistor **Q2** is turned on.

According to turning on of the current path between the collector and the emitter of the transistor **Q2**, a current flows between the emitter and the base of the transistor **Q1**, and thereby a current path between the emitter and the collector of the transistor **Q1** is turned on, and the contact pin **61** on the positive side is electrically connected with the wire of the electric cable **CB1** on the positive side. Therefore, DC power is supplied from the power apparatus **3** to the electrically driven vehicle **2** via the connector **1** for electrical connection. Here in the embodiment, the transistor **Q1** and the microswitch **16** correspond to a switch and an on/off-switching portion, respectively.

When the connector **1** for electrical connection is removed from the vehicle side inlet **300**, the microswitch **16** is turned off before disconnection of the contact pins **61** with the contact pins **301** is completed. Accordingly, the transistors **Q1**, **Q2** are turned off beforehand, and then the contact pins **61** are disconnected with the contact pins **301.** Therefore, also in the case of the present example, it is possible to suppress an electric arc from generating between the contact pins **61** of the contact portion **43** and the contact pins **301** of the vehicle side inlet **300.**

In addition, when the abnormality detector **12** detects a short-circuit current or an overload current during charging from the power apparatus **3** to the electrically driven vehicle **2**, the switch **SW1** is turned off by the abnormality transmitter **11**, and the transistors **Q1**, **Q2** are turned off. Accordingly, the feed line of electric power to be fed from the power apparatus **3** to the electrically driven vehicle **2** is cut off, and supplying to the electrically driven vehicle **2** is stopped.

Examples of the abnormality to be detected by the abnormality detector **12** include a ground fault current, a leakage current, a connection failure of the contact portion **43**, and a temperature abnormality that occurs at the contact portion **43.** Here in the embodiment, the abnormality transmitter **11** and the switch **SW1** correspond to a switch-off portion.

In the embodiment, a case where the power apparatus **3** is a DC/AC power converter is described above, as an example. However, the power apparatus **3** is not limited to the embodiment, and may be configured to supply AC power to the electrically driven vehicle **2.** In this case, a function of converting AC power into DC power needs to be provided on the side of the electrically driven vehicle **2.** In the embodiment, a case of supplying of electric power from the power apparatus **3** to the electrically driven vehicle **2** is described above, as an example. However, the connector **1** for electrical connection may be used for supplying of electric power from the electrically driven vehicle **2** to the power apparatus **3**, or for bidirectionally supplying of electric power.

In the embodiment, the connector **1** for electrical connection to be connected with the vehicle side inlet **300** of the electrically driven vehicle **2** is described above. However, the connection destination of the connector **1** for electrical connection is not limited to the embodiment, and the connector **1** for electrical connection may be used for a portion to be connected with the power apparatus **3.** In the embodiment, the power cutoff portion **10** is constituted by the electric conductors **10a** and the like, or by the transistors **Q1**, **Q2** and the like. However, constituent elements of the power cutoff portion **10** are not limited to those, and the power cutoff portion **10** may be constituted by fuse and the like.

The connector **1** for electrical connection may be configured to detect a quake due to an earthquake with the abnormality detector **12** or/and the abnormality detector **14** and stop charging to the electrically driven vehicle **2** when the magnitude of the quake is determined to be a prescribed value or more. In the embodiment, a case is described above, where the abnormality detector **12** is configured to directly detect an abnormality that occurs in the feed line. However, for example, the abnormality detector **12** may be configured to externally receive an abnormal signal, and the abnormality transmitter **11** may be configured to open the electric conductors **10a** according to the abnormal signal received by the abnormality detector **12.** In this case, the signal receiver **13** is not required, and the cost can be reduced.

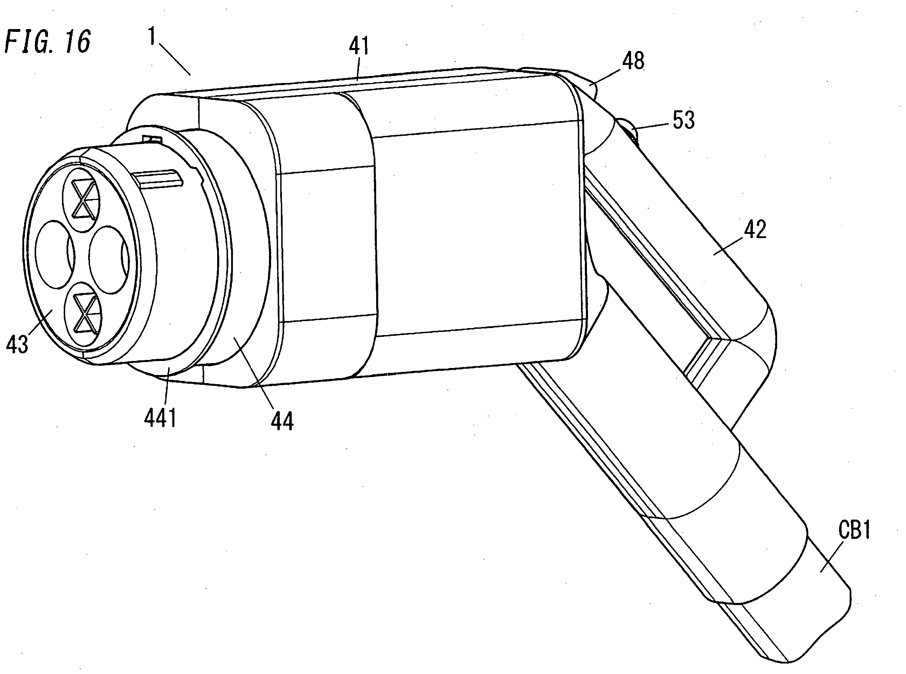

As shown in FIG. 16, the main body **41** of the connector **1** for electrical connection may have an approximately quadrangular cylindrical profile. In this case, because a component (the contact mechanism portion **60**) corresponding to a breaker in the main body originally has a quadrangle, it is possible to design appearance to match the shape of the component. Therefore, it is possible to save time and effort for designing the component corresponding to the inner breaker, and effectively utilize an internal space of the main body **41**, and eliminate a useless space in the internal space of the main body **41**, and contribute to the miniaturization of the connector **1** for electrical connection.

The connector **1** for electrical connection for an electrically driven vehicle, according to the embodiment, is configured to electrically connect the electrically driven vehicle **2**, which includes a power storage portion, with the power apparatus **3.** The power apparatus **3** is configured to control at least one of supplying of electric power to the electrically driven vehicle **2** and supplying of electric power from the electrically driven vehicle **2.** The connector **1** includes the contact portion **43** and the main body **41.** The contact portion **43** is configured to electrically connect the electric cable **CB1**, electrically connected with one of the electrically driven vehicle **2** or the power apparatus **3**, with the other of the electrically driven vehicle **2** or the power apparatus **3.** The main body **41** houses therein the contact portion **43**, the power cutoff portion **10**, and the abnormality detector **12** (first abnormality detector). The power cutoff portion **10** is configured to switch opening/closing of the feed line between the electrically driven vehicle **2** and the power apparatus **3.** The abnormality detector **12** (first abnormality detector) is configured to detect the abnormality that occurs in the feed line, or externally receive the abnormal signal. The power cutoff portion **10** is configured to open the feed line, when the abnormality detector **12** detects the abnormality or receives the abnormal signal. The abnormality detector **12** is configured to detect, as the abnormality, at least one of the short-circuit current in the feed line and the overload current in the feed line.

Preferably, as the connector **1** for electrical connection according to the embodiment, the power cutoff portion **10** includes the electric conductor **10a** connected in series with the electric cable **CB1**, and is configured to switch opening/closing of the feed line by bringing the first end of the electric conductor **10a** into contact with the second end of the electric conductor **10a** or releasing the electric conductor **10a** from the contact state. In this case, the main body **41** further houses therein the abnormality transmitter **11** and the handle **21** (switching mechanism). The abnormality transmitter **11** is configured to mechanically release the electric conductor **10a** from the contact state, when the abnormality detector **12** detects the abnormality or receives the abnormal signal. The handle **21** is configured to mechanically bring the first end of the electric conductor **10a** into contact with the second end of the electric conductor **10a** or release the electric conductor **10a** from the contact state, in the state where the abnormality detector **12** detects no abnormality and receives no abnormal signal.

Preferably, as the connector **1** for electrical connection according to the embodiment, when the contact portion **43** is connected with the electrically driven vehicle **2** or the power apparatus **3**, the handle **21** is configured to bring the first end of the electric conductor **10a** into contact with the second end of the electric conductor **10a** after connection of the contact portion **43** is completed. In this case, when the contact portion **43** is disconnected with the electrically driven vehicle **2** or the power apparatus **3**, the handle **21** is configured to release the electric conductor **10a** from the contact state before disconnection of the contact portion **43** is completed.

Preferably, as the connector **1** for electrical connection according to the embodiment, the abnormality detector **12** is configured to further detect, as the abnormality, at least one of the ground fault current in the feed line, the leakage current in the feed line, the connection failure of the contact portion **43**, and the temperature abnormality that occurs at the contact portion **43.**

Preferably, the connector **1** for electrical connection according to the embodiment further includes the signal receiver **13** configured to receive the abnormal signal that is output from the abnormality detector **14** (second abnormality detector) provided outside the main body **41.** In this case, the abnormality transmitter **11** is configured to release the electric conductor **10a** from the contact state when the signal receiver **13** receives the abnormal signal.

Preferably, as the connector **1** for electrical connection according to the embodiment, the electric conductor **10a** includes the fixed contact **220** (fixed contactor), and the movable contact **230** (movable contactor) to be separably brought into contact with the fixed contact **220.** In this case, the electric conductor **10a** is housed in the casing **57** (first casing) formed of insulating material. The power cutoff portion **10** further includes the pair of permanent magnets **58**, and the yoke **59.** The permanent magnets **58** are disposed while the N-pole of one of the permanent magnets **58** faces the S-pole of the other of the permanent magnets **58** so as to hold, between the permanent magnets **58**, the electric arc that is generated by the movable contact **230** being separated from the fixed contact **220.** The yoke **59** is magnetically connected with the permanent magnets **58** so as to form the magnetic path together with the permanent magnets **58.** The yoke **59** is disposed outside the casing **57**, and the permanent magnets **58** are disposed at portions outside the casing **57**, corresponding to the fixed contact **220** and the movable contact **230.**

Preferably, as the connector **1** for electrical connection according to the embodiment, the casing **57** is configured as the housing **20** (second casing) housing therein at least the power cutoff portion **10**, the abnormality detector **12**, the abnormality transmitter **11** and the handle **21.**

Preferably, as the connector **1** for electrical connection according to the embodiment, the permanent magnets **58** are disposed near the fixed contact **220** so as to turn according to operation of the handle **21** to change the direction of the magnetic field.

Preferably, as the connector **1** for electrical connection according to the embodiment, the power cutoff portion **10** further includes the extinguishing device **38** (extinguishing portion). In this case, the extinguishing device **38** includes the arc running plate **380** and the extinguishing grid **381.** The arc running plate **380** is configured to transfer the electric arc generated by the movable contact **230** being separated from the fixed contact **220.** The extinguishing grid **381** is configured to extinguish the electric arc transferred by the arc running plate **380.**

Preferably, as the connector **1** for electrical connection according to the embodiment, the power cutoff portion **10** includes: the transistor **Q1** (switch) connected in series with the electric cable **CB1**; and the microswitch **16** (on/off-switching portion) configured to switch on/off of the transistor **Q1** to switch opening/closing of the feed line. In this case, the main body **41** houses therein the switch-off portion (the abnormality transmitter **11** and the switch **SW1**) that is configured to turn off the transistor **Q1**, when the abnormality detector **12** detects the abnormality or receives the abnormal signal.

Preferably, as the connector **1** for electrical connection according to the embodiment, when the contact portion **43** is connected with the electrically driven vehicle **2** or the power apparatus **3**, the microswitch **16** is configured to turn on the transistor **Q1** after connection of the contact portion **43** is completed. In this case, when the contact portion **43** is disconnected with the electrically driven vehicle **2** or the power apparatus **3**, the microswitch **16** is configured to turn off the transistor **Q1** before disconnection of the contact portion **43** is completed.

Preferably, as the connector **1** for electrical connection according to the embodiment, the abnormality detector **12** is configured to further detect, as the abnormality, at least one of the ground fault current in the feed line, the leakage current in the feed line, the connection failure of the contact portion **43**, and the temperature abnormality that occurs at the contact portion **43.**

Note that, a connector for electrical connection, for an electrically driven vehicle, is disposed at an end of an electric cable for connecting the electrically driven vehicle, which includes a power storage portion, with a power apparatus. The power apparatus is configured to control at least one of supplying of a charging current to the power storage portion and receiving of a discharging current from the power storage portion. The connector is configured to be detachably connected with at least one of a socket provided at the electrically driven vehicle and a socket provided at the power apparatus. The connector includes: a main body that is provided at an end thereof with a contact portion to be inserted into the socket; and a contact mechanism portion that is housed in the main body. The contact portion includes second terminals to respectively be electrically connected with first terminals of the socket when inserted into the socket. The contact mechanism portion includes: a contact part to be inserted between at least one second terminal of the second terminals and a wire of the electric cable connected with the one second terminal; a switching mechanism configured to switch opening/closing of the contact part; an abnormality detector configured to detect an abnormality in a current that flows through the electric cable; and an abnormality transmitter configured to allow opening of the contact part when the abnormality detector detects the abnormality. The connector includes: a connection mechanism configured to allow moving of the contact portion between a removing position where the contact portion is removed from the socket and an attachment position where the contact portion is attached to the socket and the respective second terminals are electrically connected with the first terminals; a lock means configured to lock the connection state between the contact portion and the socket; and a release means configured to release the lock state by the lock means so that the contact portion can be removed from the socket. The switching mechanism is configured to close the contact part after the contact portion is moved from the removing position to the attachment position by linking with the connection mechanism, and open the contact part when the lock state by the lock means is released by linking with the release means.

## Claims

1. A connector (1) for electrical connection for an electrically driven vehicle (2), the connector (1) being configured to electrically connect the electrically driven vehicle (2), which includes a power storage portion, with a power apparatus (3) through an electric cable (CB1),
the power apparatus (3) being configured to control at least one of supplying of electric power to the electrically driven vehicle (2) and supplying of electric power from the electrically driven vehicle (2),
the connector (1) comprising:
a contact portion (43) configured to be removably inserted in an inlet (300) of one of the electrically driven vehicle (2) or the power apparatus (3), and configured to electrically connect the electric cable (CB1), electrically connected with one of the electrically driven vehicle (2) or the power apparatus (3), with the other of the electrically driven vehicle (2) or the power apparatus (3); and
a main body (41) housing therein the contact portion (43), a power cutoff portion (10), a first abnormality detector (12), an abnormality transmitter (11) and a switching mechanism, the power cutoff portion (10) being configured to switch opening/closing of a feed line between the electrically driven vehicle (2) and the power apparatus (3) by the switching mechanism, the first abnormality detector (12) being configured to detect an abnormality that occurs in the feed line, or externally receive an abnormal signal,
the power cutoff portion (10) being configured to open the feed line, when the first abnormality detector (12) detects the abnormality or receives the abnormal signal,
the first abnormality detector (12) being configured to detect, as the abnormality, at least one of a short-circuit current in the feed line and an overload current in the feed line,
the power cutoff portion (10) comprising an electric conductor (10a) configured to be connected in series with the electric cable (CB1), the electric conductor (10a) being configured into a first and second part, comprising a first contact and a second contact respectively, the power cutoff portion (10) being configured to switch open the feed line by releasing the electric conductor (10a) from a contact state by separating the first contact of the electric conductor (10a) form the second contact of the electric conductor (10a) or switch close the feed line by bringing the first contact of the electric conductor (10a) into contact with the second contact of the electric conductor (10a),
the abnormality transmitter (11) being configured to mechanically release the electric conductor (10a) from the contact state, when the first abnormality detector (12) detects the abnormality or receives the abnormal signal,
**characterized in that**
the switching mechanism includes a handle (21), the handle (21) being pivotable between an opening position where the first contact of the electric conductor (10a) separates from the second contact of the electric conductor (10a) and a closing position where the first contact of the electric conductor (10a) comes into contact with the second contact of the electric conductor (10a),
the switching mechanism is configured to mechanically bring the first contact of the electric conductor (10a) into contact with the second contact of the electric conductor (10a) by pivoting the handle (21) to the closing position or release the electric conductor (10a) from the contact state by pivoting the handle (21) to the opening position, in a state where the first abnormality detector (12) detects no abnormality and receives no abnormal signal,
when the contact portion (43) being connected with the electrically driven vehicle (2) or the power apparatus (3), the switching mechanism is configured to bring the first contact of the electric conductor (10a) into contact with the second contact of the electric conductor (10a) after connection of the contact portion (43) is completed, and
when the contact portion (43) being disconnected with the electrically driven vehicle (2) or the power apparatus (3), the switching mechanism is configured to release the electric conductor (10a) from the contact state before disconnection of the contact portion (43) is completed.

2. The connector (1) for electrical connection according to claim 1,
wherein the first abnormality detector (12) is configured to further detect, as the abnormality, at least one of a ground fault current in the feed line, a leakage current in the feed line, a connection failure of the contact portion (43), and a temperature abnormality that occurs at the contact portion (43).

3. The connector (1) for electrical connection according to any one of claim 1 or 2, further comprising a signal receiver (13) configured to receive the abnormal signal that is output from a second abnormality detector (14) provided outside the main body (41),
wherein the abnormality transmitter (11) is configured to release the electric conductor (10a) from the contact state when the signal receiver (13) receives the abnormal signal.

4. The connector (1) for electrical connection according to any one of claims 1 to 3,
wherein the electric conductor (10a) comprises a fixed contactor (220), and a movable contactor (230) to be separably brought into contact with the fixed contactor (220),
the electric conductor (10a) being housed in a first casing (57) formed of insulating material,
wherein the power cutoff portion (10) further comprises:
a pair of permanent magnets (58) disposed while an N-pole of one of the permanent magnets (58) faces an S-pole of the other of the permanent magnets (58) so as to hold, between the permanent magnets (58), an electric arc that is generated by the movable contactor (230) being separated from the fixed contactor (220); and
a yoke (59; 363) magnetically connected with the permanent magnets (58) so as to form a magnetic path together with the permanent magnets (58), and
wherein the yoke (59; 363) is disposed outside the first casing (57), and the permanent magnets (58) are disposed at portions outside the first casing (57), corresponding to the fixed contactor (220) and the movable contactor (230).

5. The connector (1) for electrical connection according to claim 4,
wherein the first casing (57) is configured to further house therein at least the power cutoff portion (10), the first abnormality detector (12), the abnormality transmitter (11) and the switching mechanism.

6. The connector (1) for electrical connection according to claim 4 or 5,
wherein the permanent magnets (58) are disposed near the fixed contactor (220) so as to turn to change a orientation of the magnetic field according to the turning operation of the switching mechanism.

7. The connector (1) for electrical connection according to any one of claims 4 to 6,
wherein the power cutoff portion (10) further comprises an extinguishing portion,
the extinguishing portion comprising:
an arc running plate (380) configured to transfer the electric arc generated by the movable contactor (230) being separated from the fixed contactor (220); and
an extinguishing grid plate (383) configured to extinguish the electric arc transferred by the arc running plate (380).

## Patentansprüche

1. Ein Verbinder (1) zur elektrischen Verbindung für ein elektrisch angetriebenes Fahrzeug (2), wobei der Verbinder (1) dazu konfiguriert ist, das elektrisch angetriebene Fahrzeug (2), das einen Energiespeicherabschnitt enthält, über ein elektrisches Kabel (CB1) mit einer Energieversorgungseinrichtung (3) elektrisch zu verbinden,
wobei die Energieversorgungseinrichtung (3) so konfiguriert ist, dass sie mindestens eines der folgenden steuert: das Zuführen von elektrischer Energie an das elektrisch angetriebene Fahrzeug (2) und das Zuführen von elektrischer Energie aus dem elektrisch angetriebenen Fahrzeug (2),
wobei der Verbinder (1) Folgendes umfasst:
einen Kontaktabschnitt (43), der so konfiguriert ist, dass er entfernbar in einen Einlass (300) eines von dem elektrisch angetriebenen Fahrzeug (2) oder der Energieversorgungseinrichtung (3) eingesetzt werden kann, und dazu konfiguriert ist, das elektrische Kabel (CB1), das mit einem von dem elektrisch angetriebenen Fahrzeug (2) oder der Energieversorgungseinrichtung (3) elektrisch verbunden ist, mit dem anderen von dem elektrisch angetriebenen Fahrzeug (2) oder der Energieversorgungseinrichtung (3) elektrisch zu verbinden; und
einen Hauptkörper (41), in dem der Kontaktabschnitt (43), ein Energieversorgungs-Unterbrechungsabschnitt (10), ein erster Abnormalitäts-Detektor (12), ein Abnormalitäts-Sender (11) und ein Umschaltmechanismus untergebracht sind, wobei der Energieversorgungs-Unterbrechungsabschnitt (10) dazu konfiguriert ist, ein Öffnen/Schließen einer Zuleitung zwischen dem elektrisch angetriebenen Fahrzeug (2) und der Energieversorgungseinrichtung (3) durch den Umschaltmechanismus umzuschalten, wobei der erste Abnormalitäts-Detektor (12) dazu konfiguriert ist, eine Abnormalität zu erfassen, die in der Zuleitung auftritt, oder extern ein Abnormalitäts-Signal zu empfangen,
wobei der Energieversorgungs-Unterbrechungsabschnitt (10) so konfiguriert ist, dass er die Zuleitung öffnet, wenn der erste Abnormalitäts-Detektor (12) die Abnormalität feststellt oder das Abnormalitäts-Signal empfängt,
wobei der erste Abnormalitäts-Detektor (12) so konfiguriert ist, dass er als Abnormalität mindestens einen der folgenden erfasst: einen Kurzschlussstrom in der Zuleitung und einen Überlaststrom in der Zuleitung,
wobei der Energieversorgungs-Unterbrechungsabschnitt (10) einen elektrischen Leiter (10a) umfasst, der dazu konfiguriert ist, mit dem elektrischen Kabel (CB1) in Reihe geschaltet zu werden, wobei der elektrische Leiter (10a) in einen ersten und einen zweiten Teil konfiguriert ist, die jeweils einen ersten Kontakt und einen zweiten Kontakt umfassen, wobei der Energieversorgungs-Unterbrechungsabschnitt (10) so konfiguriert ist, dass er die Zuleitung umschaltend öffnet (*switch open*), indem der elektrische Leiter (10a) aus einem Kontaktzustand gelöst wird durch Trennen des ersten Kontakts des elektrischen Leiters (10a) vom zweiten Kontakt des elektrischen Leiters (10a), oder die Zuleitung umschaltend schließt (*switch close*), indem der erste Kontakt des elektrischen Leiters (10a) mit dem zweiten Kontakt des elektrischen Leiters (10a) in Kontakt gebracht wird,
wobei der Abnormalitäts-Sender (11) so konfiguriert ist, dass er den elektrischen Leiter (10a) mechanisch aus dem Kontaktzustand löst, wenn der erste Abnormalitäts-Detektor (12) die Abnormalität erfasst oder das Abnormalitäts-Signal empfängt,
**dadurch gekennzeichnet, dass**
der Umschaltmechanismus einen Griff (21) beinhaltet, wobei der Griff (21) schwenkbar ist zwischen einer Öffnungsposition, in der der erste Kontakt des elektrischen Leiters (10a) vom zweiten Kontakt des elektrischen Leiters (10a) getrennt ist, und einer Schließposition, in der der erste Kontakt des elektrischen Leiters (10a) mit dem zweiten Kontakt des elektrischen Leiters (10a) in Kontakt kommt,
der Umschaltmechanismus konfiguriert ist, um den ersten Kontakt des elektrischen Leiters (10a) mechanisch mit dem zweiten Kontakt des elektrischen Leiters (10a) in Kontakt zu bringen, indem der Griff (21) in die Schließposition geschwenkt wird, oder um den elektrischen Leiter (10a) aus dem Kontaktzustand zu lösen, indem der Griff (21) in die Öffnungsposition geschwenkt wird, in einem Zustand, in dem der erste Abnormalitäts-Detektor (12) keine Abnormalität feststellt und kein abnormales Signal empfängt,
wenn der Kontaktabschnitt (43) mit dem elektrisch angetriebenen Fahrzeug (2) oder der Energieversorgungseinrichtung (3) verbunden ist, der Umschaltmechanismus dazu konfiguriert ist, den ersten Kontakt des elektrischen Leiters (10a) mit dem zweiten Kontakt des elektrischen Leiters (10a) in Kontakt zu bringen, nachdem die Verbindung des Kontaktabschnitts (43) abgeschlossen ist, und **dass**
wenn der Kontaktabschnitt (43) vom elektrisch angetriebenen Fahrzeug (2) oder der Energieversorgungseinrichtung (3) getrennt wird, der Umschaltmechanismus dazu konfiguriert ist, den elektrischen Leiter (10a) aus dem Kontaktzustand zu lösen, bevor die Trennung des Kontaktabschnitts (43) abgeschlossen ist.

2. Der Verbinder (1) zur elektrischen Verbindung nach Anspruch 1,
wobei der erste Abnormalitäts-Detektor (12) dazu konfiguriert ist, als Abnormalität ferner zumindest eines der folgenden zu erfassen: einen Erdschlussstrom in der Zuleitung, einen Leckstrom in der Zuleitung, einen Verbindungsfehler des Kontaktabschnitts (43) und eine am Kontaktabschnitt (43) auftretende Temperatur-Abnormalität.

3. Der Verbinder (1) zur elektrischen Verbindung nach irgendeinem der Ansprüche 1 oder 2, der ferner einen Signalempfänger (13) umfasst, der dazu konfiguriert ist, das abnormale Signal zu empfangen, das von einem zweiten Abnormalitäts-Detektor (14) ausgegeben wird, der außerhalb des Hauptkörpers (41) vorgesehen ist,
wobei der Abnormalitäts-Sender (11) dazu konfiguriert ist, den elektrischen Leiter (10a) aus dem Kontaktzustand zu lösen, wenn der Signalempfänger (13) das anormale Signal empfängt.

4. Der Verbinder (1) zur elektrischen Verbindung nach irgendeinem der Ansprüche von 1 bis 3,
wobei der elektrische Leiter (10a) ein festes Schütz (*contactor*) (220) und ein bewegliches Schütz (230) umfasst, das trennbar mit dem festen Schütz (220) in Kontakt gebracht werden kann,
wobei der elektrische Leiter (10a) in einem, aus isolierendem Material gebildeten ersten Gehäuse (57) untergebracht ist,
wobei der Energieversorgungs-Unterbrechungsabschnitt (10) ferner Folgendes umfasst:
ein Paar von Permanentmagneten (58), die angeordnet sind, während ein N-Pol von einem der Permanentmagnete (58) einem S-Pol des anderen der Permanentmagnete (58) gegenüberliegt, um so zwischen den Permanentmagneten (58) einen elektrischen Bogen zu halten, der dadurch erzeugt wird, dass das bewegliche Schütz (230) vom festen Schütz (220) getrennt ist; und
ein Joch (59; 363), das magnetisch mit den Permanentmagneten (58) verbunden ist, sodass es zusammen mit den Permanentmagneten (58) einen magnetischen Pfad bildet, und
wobei das Joch (59; 363) außerhalb des ersten Gehäuses (57) angeordnet ist, und die Permanentmagnete (58) an Abschnitten außerhalb des ersten Gehäuses (57) angeordnet sind, die dem festen Schütz (220) und dem beweglichen Schütz (230) entsprechen.

5. Der Verbinder (1) zur elektrischen Verbindung nach Anspruch 4,
wobei das erste Gehäuse (57) so konfiguriert ist, dass darin ferner mindestens der Energieversorgungs-Unterbrechungsabschnitt (10), der erste Abnormalitäts-Detektor (12), der Abnormalitäts-Sender (11) und der Umschaltmechanismus untergebracht sind.

6. Der Verbinder (1) zur elektrischen Verbindung nach Anspruch 4 oder 5,
wobei die Permanentmagnete (58) in der Nähe des festen Schützes (220) so angeordnet sind, dass sie sich drehen, um eine Orientierung des Magnetfeldes entsprechend dem Drehvorgang des Umschaltmechanismus zu ändern.

7. Der Verbinder (1) zur elektrischen Verbindung nach irgendeinem der Ansprüche von 4 bis 6,
wobei der Energieversorgungs-Unterbrechungsabschnitt (10) ferner einen Löschabschnitt umfasst, wobei der Löschabschnitt Folgendes umfasst:
eine Lichtbogenlaufplatte (380), die so konfiguriert ist, dass sie den elektrischen Lichtbogen überträgt, der dadurch erzeugt wird, dass das bewegliche Schütz (230) vom festen Schütz (220) getrennt ist; und
eine Löschgitterplatte (383), die so konfiguriert ist, dass sie den von der Bogenlaufplatte (380) übertragenen elektrischen Lichtbogen löscht.

## Revendications

1. Un connecteur (1) pour la connexion électrique d'un véhicule à propulsion électrique (2), le connecteur (1) étant configuré pour connecter électriquement le véhicule à propulsion électrique (2), qui inclut une partie de stockage d'énergie, avec un appareil d'alimentation (3) par l'intermédiaire d'un câble électrique (CB1),
l'appareil d'alimentation (3) étant configuré pour commander au moins l'un des éléments suivants : l'alimentation en énergie électrique du véhicule à propulsion électrique (2) et l'alimentation en énergie électrique en provenance du véhicule à propulsion électrique (2),
le connecteur (1) comprenant :
une portion de contact (43) configurée pour être insérée de manière amovible dans une entrée (300) de l'un parmi le véhicule à propulsion électrique (2) ou l'appareil d'alimentation (3), et configurée pour connecter électriquement le câble électrique (CB1), connecté électriquement à l'un parmi le véhicule à propulsion électrique (2) ou l'appareil d'alimentation (3), à l'autre parmi le véhicule à propulsion électrique (2) ou l'appareil d'alimentation (3) ; et
un corps principal (41) logeant la portion de contact (43), une portion de coupure d'alimentation (10), un premier détecteur d'anormalité (12), un transmetteur d'anormalité (11) et un mécanisme de commutation, la portion de coupure d'alimentation (10) étant configurée pour commuter l'ouverture/fermeture d'une ligne d'alimentation entre le véhicule à propulsion électrique (2) et l'appareil d'alimentation (3) par le mécanisme de commutation, le premier détecteur d'anormalité (12) étant configuré pour détecter une anormalité qui se produit dans la ligne d'alimentation, ou pour recevoir de l'extérieur un signal anormal,
la portion de coupure d'alimentation (10) étant configurée pour ouvrir la ligne d'alimentation, lorsque le premier détecteur d'anormalité (12) détecte l'anormalité ou reçoit le signal anormal,
le premier détecteur d'anormalité (12) étant configuré pour détecter, comme anormalité, au moins l'un parmi : un courant de court-circuit dans la ligne d'alimentation et un courant de surcharge dans la ligne d'alimentation,
la portion de coupure d'alimentation (10) comprenant un conducteur électrique (10a) configuré pour être connecté en série avec le câble électrique (CB1), le conducteur électrique (10a) étant configuré en une première et une deuxième partie, comprenant respectivement un premier contact et un deuxième contact, la portion de coupure d'alimentation (10) étant configurée pour commuter vers une ouverture de la ligne d'alimentation en libérant le conducteur électrique (10a) d'un état de contact en séparant le premier contact du conducteur électrique (10a) du deuxième contact du conducteur électrique (10a), ou pour commuter vers une fermeture de la ligne d'alimentation en mettant le premier contact du conducteur électrique (10a) en contact avec le deuxième contact du conducteur électrique (10a),
le transmetteur d'anormalités (11) étant configuré pour libérer mécaniquement le conducteur électrique (10a) de l'état de contact, lorsque le premier détecteur d'anormalité (12) détecte l'anormalité ou reçoit le signal anormal,
**caractérisé en ce que**
le mécanisme de commutation inclut une poignée (21), la poignée (21) pouvant pivoter entre une position d'ouverture dans laquelle le premier contact du conducteur électrique (10a) se sépare du deuxième contact du conducteur électrique (10a) et une position de fermeture dans laquelle le premier contact du conducteur électrique (10a) entre en contact avec le deuxième contact du conducteur électrique (10a),
le mécanisme de commutation est configuré pour amener mécaniquement le premier contact du conducteur électrique (10a) en contact avec le deuxième contact du conducteur électrique (10a) en faisant pivoter la poignée (21) dans la position de fermeture, ou pour libérer le conducteur électrique (10a) de l'état de contact en faisant pivoter la poignée (21) dans la position d'ouverture, dans un état où le premier détecteur d'anormalité (12) ne détecte aucune anormalité et ne reçoit aucun signal anormal,
lorsque la portion de contact (43) est connectée au véhicule à propulsion électrique (2) ou à l'appareil d'alimentation (3), le mécanisme de commutation est configuré pour amener le premier contact du conducteur électrique (10a) en contact avec le deuxième contact du conducteur électrique (10a) après que la connexion de la portion de contact (43) est réalisée, et que
lorsque la portion de contact (43) est déconnectée du véhicule à propulsion électrique (2) ou de l'appareil d'alimentation (3), le mécanisme de commutation est configuré pour libérer le conducteur électrique (10a) de l'état de contact avant que la déconnexion de la portion de contact (43) ne soit réalisée.

2. Le connecteur (1) pour la connexion électrique d'après la revendication 1,
sachant que le premier détecteur d'anormalité (12) est configuré pour détecter en outre, en tant qu'anormalité, au moins l'un parmi : un courant de défaut à la terre dans la ligne d'alimentation, un courant de fuite dans la ligne d'alimentation, une défaillance de connexion de la portion de contact (43) et une anormalité de température qui se produit au niveau de la portion de contact (43).

3. Le connecteur (1) pour la connexion électrique d'après l'une quelconque des revendications 1 ou 2, comprenant en outre un récepteur de signal (13) configuré pour recevoir le signal anormal qui est émis par un deuxième détecteur d'anormalité (14) fourni à l'extérieur du corps principal (41),
sachant que le transmetteur d'anormalité (11) est configuré pour libérer le conducteur électrique (10a) de l'état de contact lorsque le récepteur de signal (13) reçoit le signal anormal.

4. Le connecteur (1) pour la connexion électrique d'après l'une quelconque des revendications de 1 à 3,
sachant que le conducteur électrique (10a) comprend un contacteur fixe (220), et un contacteur mobile (230) à mettre en contact de manière séparable avec le contacteur fixe (220),
le conducteur électrique (10a) étant logé dans un premier boîtier (57) constitué d'un matériau isolant,
sachant que la portion de coupure d'alimentation (10) comprend en outre :
une paire d'aimants permanents (58) disposés de manière à ce qu'un pôle N de l'un des aimants permanents (58) soit en face d'un pôle S de l'autre des aimants permanents (58) de manière à maintenir, entre les aimants permanents (58), un arc électrique qui est généré par le contacteur mobile (230) qui est séparé du contacteur fixe (220) ; et
une culasse (59 ; 363) reliée magnétiquement aux aimants permanents (58) de manière à former un chemin magnétique avec les aimants permanents (58), et
sachant que la culasse (59 ; 363) est disposée à l'extérieur du premier boîtier (57), et que les aimants (58) sont disposés sur des portions à l'extérieur du premier boîtier (57), correspondant au contacteur fixe (220) et au contacteur mobile (230).

5. Le connecteur (1) pour la connexion électrique d'après la revendication 4,
sachant que le premier boîtier (57) est configuré pour y loger au moins la portion de coupure d'alimentation (10), le premier détecteur d'anormalité (12), le transmetteur d'anormalité (11) et le mécanisme de commutation.

6. Le connecteur (1) pour la connexion électrique d'après la revendication 4 ou 5,
sachant que les aimants permanents (58) sont disposés à proximité du contacteur fixe (220) de manière à tourner, afin de changer une orientation du champ magnétique en fonction de l'opération de rotation du mécanisme de commutation.

7. Le connecteur (1) pour la connexion électrique d'après l'une quelconque des revendications de 4 à 6,
sachant que la portion de coupure d'alimentation (10) comprend en outre une partie d'extinction, la partie d'extinction comprenant :
une plaque de propagation d'arc (380) configurée pour transférer l'arc électrique généré par le contacteur mobile (230) qui est séparé du contacteur fixe (220) ; et
une plaque de grille d'extinction (383) configurée pour éteindre l'arc électrique transféré par la plaque de propagation d'arc (380).
